# EUROPÄISCHE PATENTSCHRIFT

(11) **EP 4 338 993 B1**
(45) Veröffentlichungstag und Bekanntmachung des Hinweises auf die Patenterteilung: **21.01.2026**
(21) Anmeldenummer: 23179393.6
(22) Anmeldetag: 15.06.2023
(51) Int. Cl.: B60K 1/00, H01M 10/625

(54) **LANDWIRTSCHAFTLICHE ARBEITSMASCHINE**
AGRICULTURAL MACHINE
MACHINE AGRICOLE

(30) Priorität: 31.08.2022 DE 102022122052
(43) Veröffentlichungstag der Anmeldung: 20.03.2024
(73) Patentinhaber: CLAAS Industrietechnik GmbH, 33106 Paderborn (DE)
(72) Erfinder: Heymann, Philipp, 59519 Möhnesee Wamel (DE); Wilk, Benjamin, 37671 Höxter (DE)
(74) Vertreter: CLAAS Gruppe

(56) Entgegenhaltungen:
- CN-A- 111 755 776
- CN-A- 113 442 679
- CN-A- 114 261 255

## Beschreibung

Die vorliegende Erfindung betrifft eine landwirtschaftliche Arbeitsmaschine, insbesondere einen Traktor, gemäß dem Oberbegriff des Anspruches 1. Weiterhin betrifft die vorliegende Erfindung ein Verfahren zum Betrieb einer landwirtschaftlichen Arbeitsmaschine gemäß dem Oberbegriff des Anspruches 12.

Aus der EP 2 801 492 B1 ist ein Fahrzeug bekannt, welches hybrid angetrieben ist, d.h., welches neben einer als Verbrennungsmotor ausgeführten Antriebseinheit zusätzlich eine elektrische Antriebseinheit aufweist. Zur Speicherung elektrischer Energie, die der elektrischen Antriebseinheit bei Bedarf zur Verfügung gestellt werden kann, ist ein batterieelektrischer Energiespeicher vorgesehen. Für das Betreiben batterieelektrischer Energiespeicher ist es bekannt, dass diese für einen optimalen Betrieb, der die Ausschöpfung des Leistungspotentials bei geringem Lebensdauerverlust ermöglicht, innerhalb eines spezifischen Betriebstemperaturbereiches zu betreiben sind. Um den Betrieb innerhalb dieses Betriebstemperaturbereich zu gewährleisten, weisen batterieelektrische Energiespeicher einen separaten Kühlkreislauf auf. Einen wesentlichen Einfluss auf den Betrieb in diesem Betriebstemperaturbereich haben die jeweils vorherrschenden Umgebungstemperaturen. Gemäß der EP 2 801 492 B1 ist vorgesehen, den batterieelektrischen Energiespeicher in einen bestehenden Kühlkreislauf des Fahrzeugs zu integrieren, welcher der Kühlung des Verbrennungsmotors dient. Dabei wird bei Temperaturen, die unterhalb des Betriebstemperaturbereiches liegen, von dem Verbrennungsmotor an ein Kühlmittel im Kühlkreislauf des Fahrzeugs abgegebene Abwärme verwendet, um den Energiespeicher vorzuwärmen. Nach Erreichen des Betriebstemperaturbereiches muss der Energiespeicher während des laufenden Betriebes in der Regel gekühlt werden. Die hierfür gemäß der EP 2 801 492 B1 vorgesehenen Kreisläufe sind konstruktiv und betriebstechnisch aufwendig.

Der Erfindung liegt somit die Aufgabe zugrunde, eine landwirtschaftliche Arbeitsmaschine sowie ein Verfahren zum Betrieb einer landwirtschaftlichen Arbeitsmaschine bereitzustellen, welche sich durch eine konstruktiv und betriebstechnisch vereinfachte Ausgestaltung zur Vorerwärmung eines batterieelektrischen Energiespeichers auszeichnet.

Diese Aufgabe wird erfindungsgemäß durch eine landwirtschaftliche Arbeitsmaschine mit den Merkmalen des Anspruches 1 sowie ein Verfahren zum Betrieb einer landwirtschaftlichen Arbeitsmaschine mit den Merkmalen des nebengeordneten Anspruches 12 gelöst. Vorteilhafte Weiterbildungen sind Gegenstand der abhängigen Ansprüche.

Gemäß Anspruch 1 wird eine landwirtschaftliche Arbeitsmaschine, insbesondere ein Traktor, vorgeschlagen, umfassend zumindest eine Antriebseinheit, ein Hydrauliksystem zum Betreiben von Antriebs- und/oder Arbeitsaggregaten der Arbeitsmaschine und/oder eines adaptierten Anbaugerätes, sowie einen der Arbeitsmaschine zugeordneten batterieelektrischen Energiespeicher. Erfindungsgemäß ist vorgesehen, dass dem Energiespeicher ein hydraulisch betriebenes Vorwärmsystem zum Erwärmen des batterieelektrischen Energiespeichers zugeordnet ist, welches zum Anschluss an das Hydrauliksystem der Arbeitsmaschine oder des Anbaugerätes eingerichtet ist.

Das dem Energiespeicher zugeordnete Vorwärmsystem nutzt dabei das bereits vorhandene Hydrauliksystem der Arbeitsmaschine und das darin befindliche, unter Druck stehende Hydrauliköl, welches sich im laufenden Betrieb der Arbeitsmaschine erwärmt. Die Verlustleistung des Hydrauliksystem der Arbeitsmaschine wird in Wärme umgewandelt, die größtenteils vom Druckmedium des Hydrauliksystems aufgenommen wird. Diese Verlustleistung setzt sich unter anderem zusammen aus den Druckverlusten durch Rohrreibung und Strömungsumlenkungen, Leckverlusten sowie Verlusten durch Drosselvorgänge örtlicher Widerstände in dem Hydrauliksystem. Es wird somit die im Hydrauliksystems anfallende Verlustleistung genutzt, um den Energiespeicher vorzuwärmen.

Durch das hydraulisch betriebene Vorwärmsystem kann gegenüber dem Stand der Technik eine schnellere Erwärmung des batterieelektrischen Energiespeichers erreicht werden, da sich das in der Regel unter hohem Druck stehende Hydrauliköl schneller erwärmt als der Verbrennungsmotor nach einem Kaltstart, was insbesondere bei niedrigen Umgebungstemperaturen, unterhalb von 5 C Umgebungstemperatur, der Fall ist. Bei Umgebungstemperaturen um oder unterhalb des Gefrierpunktes ermöglicht es das hydraulisch betriebene Vorwärmsystem, dass der batterieelektrische Energiespeicher seinen Betriebstemperaturbereich erreichen kann.

Bevorzugt kann die zumindest eine Antriebseinheit wenigstens eine elektrische Antriebseinheit umfassen. Weiter bevorzugt kann die Arbeitsmaschine zusätzlich eine als Verbrennungsmotor ausgeführte Antriebseinheit umfassen.

Um durch das Vorwärmsystem zu erreichen, dass der batterieelektrische Energiespeicher in der Weise vorgewärmt wird, dass dieser seinen Betriebstemperaturbereich schnellstmöglich erreicht, wenn die Betriebstemperatur des batterieelektrischen Energiespeichers unterhalb des Betriebstemperaturbereiches liegt, kann die Arbeitsmaschine und/oder der batterieelektrische Energiespeicher eine Steuerungsvorrichtung zur Ansteuerung des Vorwärmsystems umfassen. Durch die Steuerungsvorrichtung kann das Vorwärmsystem während des Vorwärmvorgangs gesteuert oder geregelt werden. Bei Erreichen des für den batterieelektrischen Energiespeicher spezifischen Betriebstemperaturbereiches kann die Steuerungsvorrichtung den Vorwärmvorgang beenden. Führt eine Änderung des Betriebszustands der Arbeitsmaschine dazu, dass die Betriebstemperatur auf eine Temperatur unterhalb des Betriebstemperaturbereiches sinkt, wird das Vorwärmsystem entsprechend angesteuert, um durch erneutes Erwärmen eine innerhalb des Betriebstemperaturbereiches liegende Betriebstemperatur wieder zu erreichen.

Das Vorsehen der Steuerungsvorrichtung in dem batterieelektrischen Energiespeicher hat den Vorteil, dass diese zusätzlich die Aufgabe des erforderlichen Speichermanagements des batterieelektrischen Energiespeichers durchführen kann.

Eine konstruktive Vereinfachung der Ausgestaltung der Arbeitsmaschine kann dadurch erreicht werden, dass das Vorwärmsystem zwei Anschlüsse zum Anschließen an im Heckbereich und/oder im Frontbereich der Arbeitsmaschine angeordnete Hydraulikanschlüsse aufweist, um das Vorwärmsystem mit einer Druckleitung und einer Rücklaufleitung des Hydrauliksystems zu verbinden. Dies hat den Vorteil, dass eine zusätzliche Modifikation der Arbeitsmaschine hinsichtlich weiterer Prozessanschlüsse entfällt. Das hydraulische Vorwärmsystem kann mittels eines standardisierten Steckkupplungssystems des Hydrauliksystems der Arbeitsmaschine an dieses angeschlossen und somit mit erwärmten Hydrauliköl aus dem Hydrauliksystem versorgt werden.

Im Fall des Einsatzes des Energiespeichers mit dem erfindungsgemäßen Vorwärmsystem an dem Anbaugerät ist es vorteilhaft, zusätzliche Anschlüsse an dem Anbaugerät vorzusehen, wenn durch das Anbaugerät die an der Arbeitsmaschine verfügbaren Hydraulikanschlüsse bereits belegt sind.

Bevorzugt kann das Vorwärmsystem einen Öl-Kühlmittel-Wärmetauscher umfassen, der das Vorwärmsystem mit einem Kühlmittelkreislauf des batterieelektrischen Energiespeichers verbindet. Somit kann im Hydrauliköl enthaltene Verlustwärme unmittelbar an das im Kühlmittelkreislauf zirkulierende Kühlmedium des batterieelektrischen Energiespeichers übertragen werden. Wird der Betriebstemperaturbereich des batterieelektrischen Energiespeichers durch das Vorwärmen erreicht, dient der Kühlmittelkreislauf des Energiespeichers dazu, die Betriebstemperatur innerhalb dieses Betriebstemperaturbereiches zu halten. Dies ist insbesondere bei Umgebungstemperaturen, die oberhalb des Betriebstemperaturbereiches liegen, erforderlich.

Bevorzugt können dem Öl-Kühlmittel-Wärmetauscher ein anzusteuerndes Ventil und eine Blende vorgeschaltet sein. Das anzusteuernde Ventil kann dazu dienen, den Zufluss von Hydrauliköl vom Hydrauliksystem der Arbeitsmaschine für den Vorgang der Erwärmung zu ermöglich oder, nach Erreichen des Betriebstemperaturbereiches, zu unterbrechen. Die Blende kann dazu dienen, vor dem Auftreten eines unzulässigen Druckgradienten im Vorwärmsystem zu schützen. Darüber hinaus bewirkt die Drosselung durch die Blende ein zusätzliches Erwärmen des hindurchströmenden Hydrauliköls, bevor dieses den nachgeordneten Öl-Kühlmittel-Wärmetauscher erreicht. Weiterhin kann durch die Auswahl der Blende eine maximale Durchflussmenge reguliert werden, welche dem Öl-Kühlmittel-Wärmetauscher zugeführt wird.

Gemäß einer Weiterbildung kann der Energiespeicher zumindest einen Temperatursensor umfassen, der Messsignale zur Auswertung an die Steuerungsvorrichtung überträgt.

Somit kann die Steuerungsvorrichtung das Ventil temperaturabhängig ansteuern. Dabei kann über das Ventil das Vorwärmsystem mit dem Hydrauliköl beaufschlagt werden, sofern der Betriebstemperaturbereich des Energiespeichers noch nicht erreicht ist.

Bevorzugt kann dem Öl-Kühlmittel-Wärmetauscher ein Schutzventil vorgeschaltet sein, durch welches bei Überschreitung eines Schwellwertes für den Hydraulikdruck im Hydraulikkreis des Vorwärmsystems die beiden Anschlüsse kurzschließbar sind, die das Wärmesystem mit der Druckleitung und der Rücklaufleitung des Hydrauliksystems strömungstechnisch verbinden. Das Schutzventil dient dem Schutz des Vorwärmsystems vor unzulässigem Druck. Insbesondere kann das Schutzventil als, vorzugsweise vorgesteuertes, Druckbegrenzungsventil ausgeführt sein.

Als ein weiterer Schutzmechanismus kann dem Anschluss, welcher das Vorwärmsystem mit der Rücklaufleitung des Hydrauliksystems verbindet, ein Rückschlagventil vorgeschaltet sein. Das Rückschlagventil öffnet nur in Richtung der Rücklaufleitung. Dadurch kann bei einem versehentlichen Vertauschen der Anschlüsse beim Anschließen des Vorwärmsystems an das Hydrauliksystem eine Beschädigung des Vorwärmsystems vermieden werden.

Insbesondere kann der batterieelektrische Energiespeicher auswechselbar an der Arbeitsmaschine oder dem Anbaugerät angeordnet sein. Das Vorwärmsystem des Energiespeichers, welches für den Betrieb lediglich durch zwei Anschlüsse mit dem Hydrauliksystem der Arbeitsmaschine verbunden ist, vereinfacht einen Austausch des batterieelektrischen Energiespeichers. Ebenso ist die Anordnung des batterieelektrischen Energiespeichers an der Arbeitsmaschine oder dem Anbaugerät konstruktiv einfacher unflexibler umsetzbar. Eine Anbindung an einen bestehenden Kühlkreislauf der Arbeitsmaschine, wie dies im eingangs Stand der Technik der Fall ist, ist nicht erforderlich.

Gemäß einer bevorzugten Weiterbildung können der batterieelektrische Energiespeicher und das Vorwärmsystem als ein in einem gemeinsamen Gehäuse angeordnetes Modul ausgeführt sein. Die sich daraus ergebenden Vorteil bestehen in kurzen hydraulischen Leitungen des Vorwärmsystems, der räumlichen Nähe des Vorwärmsystems zum Energiespeicher sowie in einer einfachen Nachrüstbarkeit an bestehenden Arbeitsmaschinen und/oder Anbaugeräten, welche zumindest eine elektrische Antriebseinheit aufweisen, die durch den zum Energiespeicher mit Energie versorgt werden soll.

Alternativ kann das Vorwärmsystem am Öl-Kühlmittel-Wärmetauscher zusätzliche Anschlüsse aufweisen, die es erlauben, an korrespondierende Anschlüsse des Kühlmittelkreislaufs des Energiespeichers angeschlossen zu werden.

Weiterhin wird die eingangs gestellte Aufgabe durch ein Verfahren zum Betrieb einer landwirtschaftlichen Arbeitsmaschine mit den Merkmalen des nebengeordneten Anspruches 12 gelöst.

Gemäß Anspruch 12 wird ein Verfahren zum Betrieb einer landwirtschaftlichen Arbeitsmaschine, insbesondere eines Traktors, vorgeschlagen, wobei die Arbeitsmaschine zumindest eine Antriebseinheit, ein Hydrauliksystem zum Betreiben von Antriebs- und/oder Arbeitsaggregaten der Arbeitsmaschine und/oder eines adaptierten Anbaugerätes, sowie einen der Arbeitsmaschine zugeordneten batterieelektrischen Energiespeicher umfasst, wobei der batterieelektrische Energiespeicher zur Erreichung eines Betriebstemperaturbereiches, in welchem der Energiespeicher optimal betrieben wird, durch ein hydraulisch betriebenes Vorwärmsystem vorgewärmt wird, wobei das Vorwärmsystem zum Betreiben an das Hydrauliksystem der Arbeitsmaschine angeschlossen wird.

Insbesondere kann das Vorwärmsystem temperaturabhängig durch eine Steuerungsvorrichtung angesteuert werden, wobei zumindest ein Temperatursensor zur Temperaturbestimmung im Energiespeicher Messsignale zur Auswertung an die Steuerungsvorrichtung überträgt und wobei durch die Steuerungsvorrichtung ein Ventil angesteuert werden kann, welches in einer Zuleitung zwischen einem Öl-Kühlmittel-Wärmetauscher des Vorwärmsystems und dem Hydrauliksystem der Arbeitsmaschine angeordnet ist.

Hinsichtlich der weiteren Ausgestaltungsmöglichkeiten und der Vorteile des Verfahrens wird auf die Ausführungen zur vorschlagsgemäßen Arbeitsmaschine verwiesen.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine;
- Fig. 2: schematisch und exemplarisch eine rückwärtige Teilansicht der Arbeitsmaschine; und
- Fig. 3: einen vereinfachten Hydraulikschaltplan eines Vorwärmsystems.

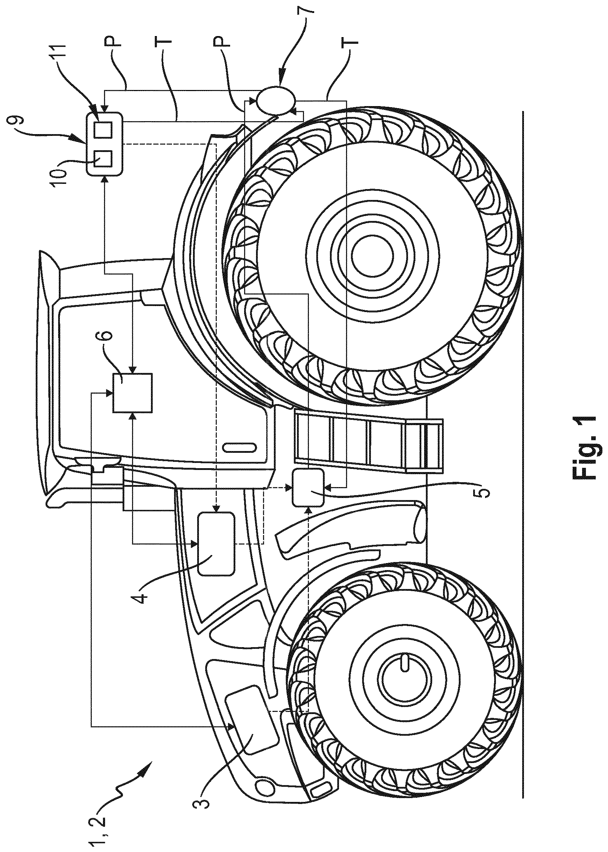

In Fig. 1 ist schematisch und exemplarisch eine landwirtschaftliche Arbeitsmaschine 1 dargestellt, welche beispielhaft als Traktor 2 ausgeführt ist. Die Arbeitsmaschine 1 kann eine als Verbrennungsmotor ausgeführte Antriebseinheit 3 und ein der Antriebseinheit 3 zugeordnetes Getriebe umfassen. Die Arbeitsmaschine 1 kann weiterhin zumindest eine elektrische Antriebseinheit 4 umfassen sowie ein Hydrauliksystem 5 zum Betreiben von Antriebs- und/oder Arbeitsaggregaten der Arbeitsmaschine 1. Durch die als Verbrennungsmotor ausgeführte Antriebseinheit 3 und/oder die zumindest eine elektrische Antriebseinheit 4 und/oder das Hydrauliksystem 5 kann zudem ein an die Arbeitsmaschine 1 adaptiertes - nicht dargestelltes - Anbaugerät, insbesondere ein angehängtes oder gezogenes Anbaugerät, angetrieben werden. Zur Ansteuerung von der als Verbrennungsmotor ausgeführten Antriebseinheit 3 und/oder der elektrischen Antriebseinheit 4 sowie des Hydrauliksystems 5 der Arbeitsmaschine 1 ist eine Steuerungsvorrichtung 6 vorgesehen. Eine oder beide Antriebseinheiten 3, 4 stellen anzutreibenden Komponenten, wie einer Hydraulikpumpe des Hydrauliksystems 5, mechanische Antriebsenergie zur Verfügung.

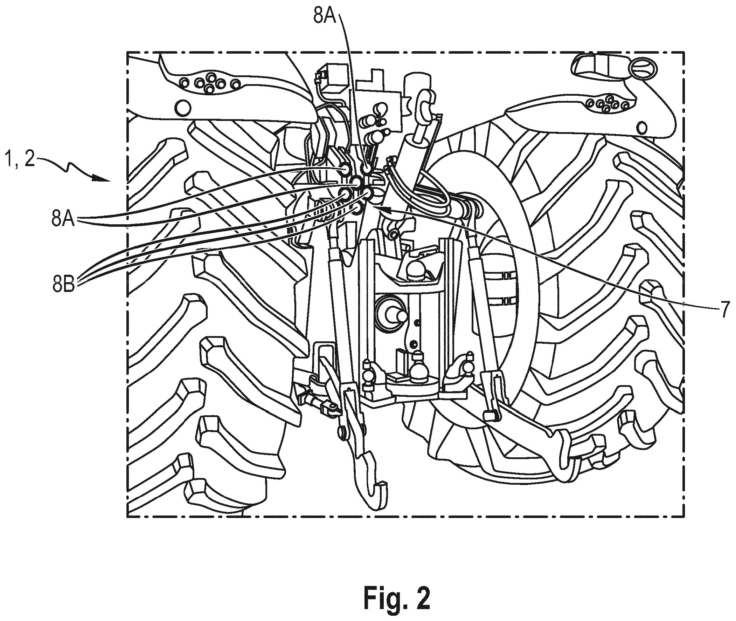

Im Heckbereich der Arbeitsmaschine 1 ist, wie in Fig. 2 schematisch und exemplarisch dargestellt, eine Hydraulikanschlussanordnung 7 mit sogenannten Remote-Anschlüssen 8A, 8B vorgesehen, die dem Anschluss externer hydraulischer Verbraucher, insbesondere denen eines Anbaugerätes, dient. Da diese hydraulischen Verbraucher jeweils über ein Steuerventil gesteuert oder betrieben werden, handelt es sich bei den Remote-Anschlüssen 8A, 8B um jeweils mindestens zwei Anschlüsse, um den oder die hydraulischen Verbraucher jeweils mit einer Druckleitung P und einer Rücklaufleitung T zu verbinden. Eine weitere Hydraulikanschlussanordnung 7 der vorstehend beschriebenen Art kann im Frontbereich der Arbeitsmaschine 1 angeordnet sein.

Der Arbeitsmaschine 1 ist ein batterieelektrische Energiespeicher 9 zugeordnet. Der batterieelektrische Energiespeicher 9 kann hierbei in bzw. an der Arbeitsmaschine 1 fest verbaut sein. Der batterieelektrische Energiespeicher 9 kann aber auch lösbar mit der Arbeitsmaschine 1 verbunden sein. Ebenso kann der batterieelektrische Energiespeicher 9 an dem Anbaugerät ortsfest oder lösbar angeordnet sein. Die Anordnung am Anbaugerät ist vorteilhaft, wenn das Anbaugerät seinerseits über zumindest eine elektrische Antriebseinheit verfügt. In den batterieelektrischen Energiespeicher 9 kann eine Steuerungsvorrichtung 10 integriert sein, welche unter anderem dem Speichermanagement des batterieelektrischen Energiespeichers 9 dient.

Weiterhin umfasst der Energiespeicher 9 ein hydraulisch betriebenes Vorwärmsystem 11. Das Vorwärmsystem 11 dient dazu, den Energiespeicher 9 vorzuwärmen, damit dieser schnellstmöglich im für den Energiespeicher 9 vorgesehenen Betriebstemperaturbereiches betrieben werden kann. Das Betreiben des batterieelektrischen Energiespeichers 9 im Betriebstemperaturbereich ist für die Lebensdauer und das Ausschöpfen des Leistungspotentials des Energiespeichers 9 von großer Bedeutung. Insbesondere der Betrieb des Energiespeichers 9 bei Umgebungstemperaturen, die signifikant unterhalb des Betriebstemperaturbereiches liegen, führen zum Lebensdauerverlust.

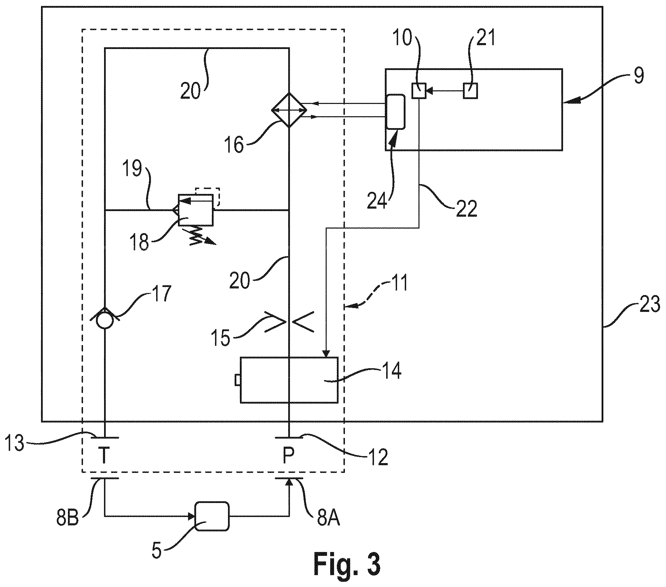

In Fig. 3 ist ein vereinfachter Hydraulikschaltplan des Vorwärmsystems 11 dargestellt. Das Vorwärmsystem 11 umfasst zwei Anschlüsse 12, 13 zum Anschließen an zwei der im Heckbereich oder Frontbereich der Arbeitsmaschine 1 angeordneten Hydraulikanschlüsse 8A, 8B auf. Durch den Anschluss 12 wird das Vorwärmsystem 11 mit der Druckleitung P und durch den Anschluss 13 mit der Rücklaufleitung T des Hydrauliksystems 5 verbunden.

Das Vorwärmsystem 11 umfasst einen Öl-Kühlmittel-Wärmetauscher 16, der das Vorwärmsystem 11 mit einem schematisch dargestellten Kühlmittelkreislauf 24 des batterieelektrischen Energiespeichers 9 verbindet. Dem Öl-Kühlmittel-Wärmetauscher 16 sind ein anzusteuerndes Ventil 14 und eine Blende 15 vorgeschaltet. Weiter ist dem Anschluss 13, welcher das Vorwärmsystem 11 mit der Rücklaufleitung T des Hydrauliksystems 5 verbindet, ein Rückschlagventil 17 vorgeschaltet. Das Rückschlagventil 17 öffnet nur in Richtung der Rücklaufleitung T des Hydrauliksystems 5.

Dem Öl-Kühlmittel-Wärmetauscher 16 ist ein Schutzventil 18 vorgeschaltet. Das Schutzventil 18 ist in einer Zweigleitung 19 angeordnet, die parallel zur Hydraulikleitung 20 verläuft, welche den Öl-Kühlmittel-Wärmetauscher 16 mit den Anschlüssen 12 und 13 fluidleitend verbindet. Insbesondere kann das Schutzventil 18 als ein, vorzugsweise vorgesteuertes, Druckbegrenzungsventil ausgeführt sein.

Der Energiespeicher 9 umfasst zumindest einen Temperatursensor 21, der Messsignale zur Auswertung an die Steuerungsvorrichtung 10 des Energiespeichers 9 und/oder die Steuerungsvorrichtung 6 der Arbeitsmaschine 1 überträgt.

Das Ventil 14 wird temperaturabhängig von der Steuerungsvorrichtung 10 und/oder der Steuerungsvorrichtung 6 angesteuert. Hierzu werden Steuersignale der Steuerungsvorrichtung 10 mittels einer Signalleitung 22 an das Ventil 14 übertragen. Liegt die durch den zumindest einen Temperatursensor 21 detektierte Betriebstemperatur unterhalb des Betriebstemperaturbereiches des Energiespeichers 9, wird das Ventil 14 geöffnet. Das dem Energiespeicher 9 zugeordnete Vorwärmsystem 11 nutzt dabei das bereits vorhandene Hydrauliksystem 5 und das darin befindliche, unter Druck stehende Hydrauliköl, welches sich im laufenden Betrieb der Arbeitsmaschine 1 aufgrund der Verlustleistung des Hydrauliksystem 5 erwärmt.

Nachdem der Betriebstemperaturbereich des Energiespeichers 9 durch das Vorwärmen erreicht wurde, wird das Ventil 14 geschlossen. Führt eine Änderung des Betriebszustands der Arbeitsmaschine 1 dazu, dass die durch den zumindest einen Temperatursensor 21 detektierte Betriebstemperatur auf eine Temperatur unterhalb des Betriebstemperaturbereiches fällt, beispielsweise wegen einer Betriebsunterbrechung, wird das Ventil 14 erneut angesteuert, um es wieder zu öffnen.

Das vom Hydrauliksystem 5 kommende Hydrauliköl wird durch die Blende 15 gedrosselt. Die Drosselung durch die Blende 15 hat den Effekt, dass ein zusätzliches Erwärmen des hindurchströmenden Hydrauliköls erfolgt, bevor dieses den Öl-Kühlmittel-Wärmetauscher 16 erreicht. Weiterhin kann durch die Auswahl der Blende 15 eine maximale Durchflussmenge reguliert werden, welche dem Öl-Kühlmittel-Wärmetauscher 16 zugeführt wird. Zudem kann die Blende 15 dazu dienen, das Vorwärmsystem 11 vor dem Auftreten eines unzulässigen Druckgradienten zu schützen.

Durch das Schutzventil 18 können bei Überschreitung eines Schwellwertes für den Hydraulikdruck in der Hydraulikleitung 20 des Vorwärmsystems 11 die beiden Anschlüsse 12, 13 kurzgeschlossen werden. Das über den Anschluss 12 zugeführte Hydrauliköl kann über das Schutzventil 18 durch die Zweigleitung 19 direkt, d.h. unter Umgehung des Öl-Kühlmittel-Wärmetauschers 16, zum Anschluss 13 abfließen.

Dem Rückschlagventil 17 kommt die Aufgabe zu, bei einem versehentlichen Fehlanschluss der Anschlüsse 12, 13, bei dem der Anschluss 13 mit der Druckleitung P statt der Rücklaufleitung T des Hydrauliksystems 5 verbunden wird, eine Beschädigung des Vorwärmsystems 11 zu verhindern.

Gemäß dem in Fig. 3 dargestellten Ausführungsbeispiel können das Vorwärmsystem 11 und der batterieelektrische Energiespeicher 9 in einem gemeinsamen Gehäuse 23 angeordnet sein. Dadurch können das Vorwärmsystem 11 und der batterieelektrische Energiespeicher 9 als ein Modul ausgeführt sein. Die modulare Ausführung ermöglicht eine größere Flexibilität in der Verwendung und Anordnung.

Denkbar ist aber auch eine Anordnung, bei der das Vorwärmsystem 11 und der batterieelektrische Energiespeicher 9 jeweils eigene Module bilden. Hierzu können der Öl-Kühlmittel-Wärmetauscher 16 und der Kühlmittelkreislauf 24 des batterieelektrischen Energiespeichers 9 mit separaten Anschlüssen ausgeführt sein, die durch geeignete Zuleitungen miteinander verbindbar sind.

Die modulare Ausgestaltung des Vorwärmsystem 11 und des batterieelektrischen Energiespeichers 9 als ein Modul oder als zwei separate Module bietet den Vorteil einer einfachen Nachrüstung an der Arbeitsmaschine und/oder einem zu adaptierenden Anbaugerät.

### Bezugszeichenliste

- 1: Arbeitsmaschine
- 2: Traktor
- 3: Antriebseinheit
- 4: Antriebseinheit
- 5: Hydrauliksystem
- 6: Steuerungsvorrichtung
- 7: Hydraulikanschlussanordnung
- 8A: Remote-Anschluss
- 8B: Remote-Anschluss
- 9: Batterieelektrischer Energiespeicher
- 10: Steuerungsvorrichtung
- 11: Vorwärmsystem
- 12: Anschluss
- 13: Anschluss
- 14: Ventil
- 15: Blende
- 16: Öl-Kühlmittel-Wärmetauscher
- 17: Rückschlagventil
- 18: Schutzventil
- 19: Zweigleitung
- 20: Hydraulikleitung
- 21: Temperatursensor
- 22: Signalleitung
- 23: Gehäuse
- 24: Kühlmittelkreislauf
- P: Druckleitung
- T: Rücklaufleitung

## Patentansprüche

1. Landwirtschaftliche Arbeitsmaschine (1), insbesondere Traktor (2), umfassend zumindest eine Antriebseinheit (3, 4), ein Hydrauliksystem (5) zum Betreiben von Antriebs- und/oder Arbeitsaggregaten der Arbeitsmaschine (1) und/oder eines adaptierten Anbaugerätes, sowie einen der Arbeitsmaschine (1) zugeordneten batterieelektrischen Energiespeicher (9), wobei dem Energiespeicher (9) ein hydraulisch betriebenes Vorwärmsystem (11) zum Erwärmen des batterieelektrischen Energiespeichers (9) zugeordnet ist, welches zum Anschluss an das Hydrauliksystem (5) der Arbeitsmaschine (1) eingerichtet ist, **dadurch gekennzeichnet, dass** das Vorwärmsystem (11) zwei Anschlüsse (12, 13) zum Anschließen an im Heckbereich und/oder Frontbereich der Arbeitsmaschine (1) angeordnete Hydraulikanschlüsse (8A, 8B) aufweist, um das Vorwärmsystem (11) mit einer Druckleitung (P) und einer Rücklaufleitung (T) des Hydrauliksystems (5) zu verbinden.

2. Landwirtschaftliche Arbeitsmaschine (1) nach Anspruch 1, **dadurch gekennzeichnet, dass** die Arbeitsmaschine (1) und/oder der batterieelektrische Energiespeicher (9) eine Steuerungsvorrichtung (6, 10) zur Ansteuerung des Vorwärmsystems (11) umfasst.

3. Landwirtschaftliche Arbeitsmaschine (1) nach Anspruch 1 oder 2, **dadurch gekennzeichnet, dass** das Vorwärmsystem (11) einen Öl-Kühlmittel-Wärmetauscher (16) umfasst, der das Vorwärmsystem (11) mit einem Kühlmittelkreislauf (24) des batterieelektrischen Energiespeichers (9) verbindet.

4. Landwirtschaftliche Arbeitsmaschine (1) nach Anspruch 3, **dadurch gekennzeichnet, dass** dem Öl-Kühlmittel-Wärmetauscher (16) ein anzusteuerndes Ventil (14) und eine Blende (15) vorgeschaltet sind.

5. Landwirtschaftliche Arbeitsmaschine (1) nach einem der Ansprüche 2 bis 4, **dadurch gekennzeichnet, dass** der Energiespeicher (9) zumindest einen Temperatursensor (21) umfasst, der Messsignale zur Auswertung an die Steuerungsvorrichtung (6, 10) überträgt.

6. Landwirtschaftliche Arbeitsmaschine (1) nach Anspruch 5, **dadurch gekennzeichnet, dass** die Steuerungsvorrichtung (6, 10) das Ventil (14) temperaturabhängig ansteuert.

7. Landwirtschaftliche Arbeitsmaschine (1) nach einem der Ansprüche 3 bis 6, **dadurch gekennzeichnet, dass** dem Öl-Kühlmittel-Wärmetauscher (16) ein Schutzventil (18) vorgeschaltet ist, durch welches bei Überschreitung eines Schwellwertes für den Hydraulikdruck im Hydraulikkreis des Vorwärmsystems (11) die beiden Anschlüsse (12, 13) kurzschließbar sind.

8. Landwirtschaftliche Arbeitsmaschine (1) nach einem der Ansprüche 1 bis 7, **dadurch gekennzeichnet, dass** dem Anschluss (13), welcher das Vorwärmsystem (11) mit der Rücklaufleitung (T) des Hydrauliksystems (5) verbindet, ein Rückschlagventil (17) vorgeschaltet ist.

9. Landwirtschaftliche Arbeitsmaschine (1) nach einem der vorangehenden Ansprüche, **dadurch gekennzeichnet, dass** der batterieelektrische Energiespeicher (9) auswechselbar an der Arbeitsmaschine (1) oder dem Anbaugerät angeordnet ist.

10. Landwirtschaftliche Arbeitsmaschine (1) nach einem der vorangehenden Ansprüche, **dadurch gekennzeichnet, dass** der batterieelektrische Energiespeicher (9) und das Vorwärmsystem (11) als ein in einem gemeinsamen Gehäuse (23) angeordnetes Modul ausgeführt sind.

11. Verfahren zum Betrieb einer landwirtschaftlichen Arbeitsmaschine (1), insbesondere eines Traktors (2), welche zumindest eine Antriebseinheit (3, 4), ein Hydrauliksystem (5) zum Betreiben von Antriebs- und/oder Arbeitsaggregaten der Arbeitsmaschine (1) und/oder eines adaptierten Anbaugerätes, sowie einen der Arbeitsmaschine (1) zugeordneten batterieelektrischen Energiespeicher (9) umfasst, wobei der batterieelektrische Energiespeicher (9) zur Erreichung eines Betriebstemperaturbereiches, in welchem der Energiespeicher (9) optimal betrieben wird, durch ein hydraulisch betriebenes Vorwärmsystem (11) vorgewärmt wird, wobei das Vorwärmsystem (11) zum Betreiben an das Hydrauliksystem (5) der Arbeitsmaschine (1) angeschlossen wird, **dadurch gekennzeichnet, dass** das Vorwärmsystem (11) zwei Anschlüsse (12, 13) zum Anschließen an im Heckbereich und/oder Frontbereich der Arbeitsmaschine (1) angeordnete Hydraulikanschlüsse (8A, 8B) aufweist, um das Vorwärmsystem (11) mit einer Druckleitung (P) und einer Rücklaufleitung (T) des Hydrauliksystems (5) zu verbinden.

12. Verfahren nach Anspruch 11, **dadurch gekennzeichnet, dass** das Vorwärmsystem (11) temperaturabhängig durch eine Steuerungsvorrichtung (6, 10) angesteuert wird, wobei zumindest ein Temperatursensor (21) zur Temperaturbestimmung im Energiespeicher (9) Messsignale zur Auswertung an die Steuerungsvorrichtung (6, 10) überträgt und dass durch die Steuerungsvorrichtung (6, 10) ein Ventil (14) angesteuert wird, welches in einer Zuleitung (20) zwischen einem Öl-Kühlmittel-Wärmetauscher (16) des Vorwärmsystems (11) und dem Hydrauliksystem (5) der Arbeitsmaschine (1) angeordnet ist.

## Claims

1. An agricultural working machine (1), in particular a tractor (2), comprising at least a propulsion unit (3, 4), a hydraulic system (5) for operating propulsion assemblies and/or working assemblies of the working machine (1) and/or of an adapted mounted implement, as well as a battery-electric energy storage device (9) associated with the working machine (1), wherein a hydraulically operated preheating system (11) for heating the battery-electric energy storage device (9) is associated with the energy storage device (9), the preheating system being configured for connection to the hydraulic system (5) of the working machine (1), **characterized in that** the preheating system (11) has two connections (12, 13) for connection to hydraulic connections (8A, 8B) disposed in the rear region and/or front region of the working machine (1) in order to connect the preheating system (11) to a pressure line (P) and to a return line (T) of the hydraulic system (5).

2. The agricultural working machine (1) according to claim 1, **characterized in that** the working machine (1) and/or the battery-electric energy storage device (9) comprises a control device (6, 10) for controlling the preheating system (11).

3. The agricultural working machine (1) according to claim 1 or claim 2, **characterized in that** the preheating system (11) comprises an oil-coolant heat exchanger (16) which connects the preheating system (11) to a coolant circuit (24) of the battery-electric energy storage device (9).

4. The agricultural working machine (1) according to claim 3, **characterized in that** a valve (14) to be controlled and an orifice plate (15) are connected upstream of the oil-coolant heat exchanger (16).

5. The agricultural working machine (1) according to one of claims 2 to 4, **characterized in that** the energy storage device (9) comprises at least one temperature sensor (21) which transmits measurement signals to the control device (6, 10) for evaluation.

6. The agricultural working machine (1) according to claim 5, **characterized in that** the control device (6, 10) controls the valve (14) as a function of temperature.

7. The agricultural working machine (1) according to one of claims 3 to 6, **characterized in that** a safety valve (18) is connected upstream of the oil-coolant heat exchanger (16), by which safety valve the two connections (12, 13) can be short-circuited in the event that a threshold value for the hydraulic pressure in the hydraulic circuit of the preheating system (11) is exceeded.

8. The agricultural working machine (1) according to one of claims 1 to 7, **characterized in that** a check valve (17) is connected upstream of the connection (13) which connects the preheating system (11) to the return line (T) of the hydraulic system (5).

9. The agricultural working machine (1) according to one of the preceding claims, **characterized in that** the battery-electric energy storage device (9) is disposed on the working machine (1) or the mounted implement in an interchangeable manner.

10. The agricultural working machine (1) according to one of the preceding claims, **characterized in that** the battery-electric energy storage device (9) and the preheating system (11) are constructed as a module disposed in a common housing (23).

11. A method for operating an agricultural machine (1), in particular a tractor (2), which comprises at least a propulsion unit (3, 4), a hydraulic system (5) for operating propulsion assemblies and/or working assemblies of the working machine (1) and/or of an adapted mounted implement, as well as a battery-electric energy storage device (9) associated with the working machine (1), wherein the battery-electric energy storage device (9) is preheated by a hydraulically operated preheating system (11) in order to reach an operating temperature range in which the energy storage device (9) is optimally operated, wherein the preheating system (11) is connected to the hydraulic system (5) of the working machine (1) for operation, **characterized in that** the preheating system (11) has two connections (12, 13) for connection to hydraulic connections (8A, 8B) disposed in the rear region and/or front region of the working machine (1) in order to connect the preheating system (11) to a pressure line (P) and to a return line (T) of the hydraulic system (5).

12. The method according to claim 11, **characterized in that** the preheating system (11) is controlled as a function of temperature by a control device (6, 10), wherein at least one temperature sensor (21) for determining the temperature in the energy storage device (9) transmits measurement signals to the control device (6, 10) for evaluation, and **in that** a valve (14) which is disposed in a supply line (20) between an oil-coolant heat exchanger (16) of the preheating system (11) and the hydraulic system (5) of the working machine (1) is controlled by the control device (6, 10).

## Revendications

1. Machine agricole (1), en particulier tracteur (2), comprenant au moins une unité d'entraînement (3, 4), un système hydraulique (5) destiné à faire fonctionner des organes d'entraînement et/ou de travail de la machine agricole (1) et/ou d'un outil attelé adapté, ainsi qu'un accumulateur d'énergie (9) électrique à batterie associé à la machine agricole (1), un système de préchauffage (11) à fonctionnement hydraulique, destiné à chauffer l'accumulateur d'énergie (9) électrique à batterie, est associé à l'accumulateur d'énergie (9), lequel système est agencé en vue du raccordement au système hydraulique (5) de la machine agricole (1), **caractérisée en ce que** le système de préchauffage (11) comprend deux raccords (12, 13) destinés à la connexion à des raccords hydrauliques (8A, 8B) placés dans la partie arrière et/ou la partie avant de la machine agricole (1), aux fins de relier le système de préchauffage (11) à une conduite de pression (P) et une conduite de retour (T) du système hydraulique (5).

2. Machine agricole (1) selon la revendication 1, **caractérisée en ce que** la machine agricole (1) et/ou l'accumulateur d'énergie (9) électrique à batterie comprend un dispositif de commande (6, 10) destiné à activer le système de préchauffage (11).

3. Machine agricole (1) selon la revendication 1 ou 2, **caractérisée en ce que** le système de préchauffage (11) comprend un échangeur de chaleur huile-réfrigérant (16) qui relie le système de préchauffage (11) à un circuit de réfrigérant (24) de l'accumulateur d'énergie (9) électrique à batterie.

4. Machine agricole (1) selon la revendication 3, **caractérisée en ce qu'**une vanne (14), devant être activée, et un étrangleur (15) sont placés en amont de l'échangeur de chaleur huile-réfrigérant (16).

5. Machine agricole (1) selon une des revendications 2 à 4, **caractérisée en ce que** l'accumulateur d'énergie (9) comprend au moins un capteur de température (21) qui transmet des signaux de mesure au dispositif de commande (6, 10), en vue de l'évaluation.

6. Machine agricole (1) selon la revendication 5, **caractérisée en ce que** le dispositif de commande (6, 10), active la vanne (14) en fonction de la température.

7. Machine agricole (1) selon une des revendications 3 à 6, **caractérisée en ce qu'**une vanne de protection (18) est placée en amont de l'échangeur de chaleur huile-réfrigérant (16), qui permet de court-circuiter les deux raccords (12, 13) en cas de dépassement d'une valeur seuil pour la pression hydraulique dans le circuit hydraulique du système de préchauffage (11).

8. Machine agricole (1) selon une des revendications 1 à 7, **caractérisée en ce qu'**un clapet de non-retour (17) est placé en amont du raccord (13) reliant le système de préchauffage (11) à la conduite de retour (T) du système hydraulique (5).

9. Machine agricole (1) selon une des revendications précédentes, **caractérisée en ce que** l'accumulateur d'énergie (9) électrique à batterie est installé avec possibilité de remplacement sur la machine agricole (1) ou l'outil attelé.

10. Machine agricole (1) selon une des revendications précédentes, **caractérisée en ce que** l'accumulateur d'énergie (9) électrique à batterie et le système de préchauffage (11) sont réalisés sous la forme d'un module disposé dans un boîtier (23) commun.

11. Procédé pour faire fonctionner une machine agricole (1), en particulier un tracteur (2), qui comprend au moins une unité d'entraînement (3, 4), un système hydraulique (5) destiné à faire fonctionner des organes d'entraînement et/ou de travail de la machine agricole (1) et/ou d'un outil attelé adapté, ainsi qu'un accumulateur d'énergie (9) électrique à batterie associé à la machine agricole (1), sachant que pour atteindre une plage de températures de service dans laquelle l'accumulateur d'énergie (9) présente un fonctionnement optimal, l'accumulateur d'énergie (9) électrique à batterie est préchauffé par un système de préchauffage (11) à fonctionnement hydraulique, ledit système de préchauffage (11) étant connecté, en vue du fonctionnement, au système hydraulique (5) de la machine agricole (1), **caractérisé en ce que** le système de préchauffage (11) comprend deux raccords (12, 13) destinés à la connexion à des raccords hydrauliques (8A, 8B) placés dans la partie arrière et/ou la partie avant de la machine agricole (1), aux fins de relier le système de préchauffage (11) à une conduite de pression (P) et une conduite de retour (T) du système hydraulique (5).

12. Procédé selon la revendication 11, **caractérisé en ce que** le système de préchauffage (11) est activé par un dispositif de commande (6, 10), en fonction de la température, sachant que, en vue de la détermination de la température dans l'accumulateur d'énergie (9), au moins un capteur de température (21) transmet des signaux de mesure au dispositif de commande (6, 10), en vue de l'évaluation, et **en ce que** le dispositif de commande (6, 10) active une vanne (14) qui est placée dans une conduite d'amenée (20) entre un échangeur de chaleur huile-réfrigérant (16) du système de préchauffage (11) et le système hydraulique (5) de la machine agricole (1).
